**Europäisches Patentamt**

**European Patent Office**

**Office européen des brevets**

(19)

(11) Numéro de publication: **0 243 276
B1**

## (12) FASCICULE DE BREVET EUROPÉEN

(45) Date de publication du fascicule du brevet:
**06.12.89**

(21) Numéro de dépôt: **87400942.6**

(22) Date de dépôt: **23.04.87**

(51) Int. Cl.⁴: **B 66 F 9/00,** B 60 P 1/64,
B 64 D 9/00

(54) **Dispositif et élément de manutention-roulage pour conteneurs ou analogues.**

(30) Priorité: **24.04.86 FR 8605968**

(43) Date de publication de la demande:
**28.10.87 Bulletin 87/44**

(45) Mention de la délivrance du brevet:
**06.12.89 Bulletin 89/49**

(84) Etats contractants désignés:
**AT BE CH DE ES FR GB GR IT LI LU NL SE**

(56) Documents cité:
**FR-A-1 459 243
US-A-3 497 231
US-A-3 834 111**

(73) Titulaire: **TOUTENKAMION, R.N. 60 Route de
Bellegarde, F-45270 Ladon (FR)**

(72) Inventeur: **Girerd, Marc, R.N. 60 Route de
Bellegarde, F-45270 Ladon (FR)**

(74) Mandataire: **Bouju, André, Cabinet Bouju 38
avenue de la Grande Armée, F-75017 Paris (FR)**

EP 0 243 276 B1

LIBER, STOCKHOLM 1989

## Description

La présente invention concerne un dispositif de manutention-roulage destiné à être monté sur roues et adapté à soulever une extrémité d'un conteneur et le maintenir en position soulevée pendant un déplacement ou une manutention du conteneur, cet élément comprenant:

- un châssis,
- un tablier muni de moyens de fixation amovible à une face d'un conteneur et articulé relativement au châssis autour d'un axe d'articulation, et
- des moyens pour régler l'angle entre le tablier et le châssis.

Dans un tel dispositif, connu d'après le US-A-3 497 231, le tablier est articulé au châssis, à une extrémité de celui-ci.

Pour effectuer une manutention, on incline le châssis de façon que ladite extrémité soit adjacente au sol, puis on fixe le tablier au conteneur. A la suite de cela, on fait varier l'angle tablier-châssis de façon que le châssis pivote vers l'horizontale tandis que le conteneur est soulevé. Un dispositif similaire effectue la même opération à l'autre extrémité du conteneur. Pendant le déplacement qui suit, le conteneur reste suspendu entre les deux dispositifs montés chacun sur roues. Il en résulte que la fixation entre le conteneur et chaque tablier subit tous les efforts de la route. Le conteneur subit des efforts importants en flexion. L'empattement de l'ensemble roulant qui en résulte (distance entre les essieux d'un dispositif à l'autre) est excessif.

Le but de l'invention est de perfectionner le dispositif connu pour en éliminer les inconvénients précités.

Suivant l'invention, le dispositif est caractérisé en ce que le tablier est articulé autour de cet axe d'articulation à un chariot déplaçable le long du châssis, aménagé en châssis-rampe, selon une direction transversale à l'axe d'articulation entre une première position extrême où, de manière connue en soi, l'axe d'articulation est voisin d'une extrémité du châssis et une deuxième position ou l'axe d'articulation est en retrait de cette extrémité.

Ainsi, lorsque le levage du conteneur est terminé, on déplace le chariot le long du châssis pour engager le châssis sous le conteneur et on fait en sorte que le conteneur repose sur le châssis pendant le déplacement routier, la manutention, etc... Le conteneur subit donc des efforts nettement moins défavorables. De plus, l'engagement du châssis sous le conteneur à chaque extrémité de celui-ci réduit l'empattement de l'ensemble et le ramène à une valeur acceptable au regard des valeurs maximales autorisées. L'invention procure ainsi le moyen de réaliser très facilement un ensemble routier (capable de se déplacer à des vitesses de l'ordre de 100 km/h) avec des moyens très simples et très faciles à mettre en oeuvre, sur la base d'un conteneur ne nécessitant aucun aménagement préalable autre que les moyens de fixation généralement imposés par les normes.

De préférence, les moyens pour régler l'angle entre le tablier et le châssis comprennent un vérin articulé au tablier à distance de l'axe d'articulation, et au châssis à distance de sa-dite extrémité, et les moyens pour régler l'angle entre le tablier et le châssis comprennent en outre des moyens pour bloquer sélectivement le positionnement du tablier par rapport au chariot, de façon que le vérin puisse, une fois le blocage effectué, servir à déplacer le chariot le long du châssis-rampe.

Ainsi, le même vérin sert à orienter le tablier par rapport au châssis et à déplacer le chariot le long du châssis, selon que le blocage est réalisé ou non.

Les moyens pour bloquer sélectivement le pivotement du tablier peuvent comprendre au moins une entretoise amovible triangulant le tablier et le chariot.

Les moyens précités peuvent avantageusement bloquer le tablier dans une position où le châssis fait un angle légèrement inférieur à 90° avec la face concernée du conteneur lorsque le tablier est fixé à celle-ci.

Lorsque le tablier est bloqué dans cette position, le chariot peut être déplacé le long du châssis pour engager le châssis sous le conteneur sans qu'il y ait frottement entre châssis et conteneur. A la fin de cette opération, le tablier est à nouveau manoeuvré pour laisser le conteneur reposer sur le châssis.

De préférence, une roulette ou analogue est montée sur le châssis au voisinage de ladite extrémité de celui-ci, cette roulette étant positionnée pour être en contact avec le sol lorsque le tablier est en position propre à sa fixation sur une face du conteneur.

Grâce à cette roulette, le dispositif peut être approché du conteneur alors que le tablier est très près du sol sans qu'il y ait raclement sur le sol.

Avantageusement, le tablier peut être fixé dans une position rabattue sur le châssis avec des moyens de fixation capables de retenir le châssis en position sensiblement verticale contre le tablier lorsque le tablier est fixé à un conteneur.

Ainsi le dispositif peut prendre une position inactive dans laquelle il est escamoté contre une face du conteneur. Ceci est très commode dans une cale d'avion cargo.

Dans un autre mode de réalisation des moyens pour régler l'angle entre le tablier et le châssis, ces derniers comprennent un vérin articulé au tablier et au chariot à distance de leur axe d'articulation mutuel tandis qu'un second vérin, tel qu'un système vis-écrou, s'étendant selon la direction transversale à l'axe d'articulation précité, positionne de manière réglable le chariot le long du châssis-rampe. De la sorte, il n'y a plus d'entretoise amovible à manipuler, et les efforts de déplacement du chariot sont parallèles à la direction de ce déplacement, ce qui réduit les contraintes et élimine les problèmes liés aux risques de coincement.

Le châssis-rampe peut comporter des moyens pour son montage sur un véhicule avec possibilité de pivotement autour d'un axe parallèle à et distant de l'axe d'articulation entre le tablier et le chariot.

Selon un autre aspect, l'invention concerne un élément de manutention-roulage comprenant un dispositif selon le premier aspect dont le châssis est fixé à un train roulant.

De préférence, le train roulant est orientable directionnellement par rapport au châssis.

Si le train roulant de l'un des éléments utilisés pour supporter le conteneur comprend deux essieux solidaires directionnellement, les deux trains peuvent ére orientés de façon que l'axe de leurs roues soit dirigé selon la longueur du conteneur, pour déplacer celui-ci latéralement.

Ainsi, en utilisant tout ou partie des particularités ci-dessus, on peut à l'aide de deux éléments de manutention-roulage identiques ou non:

- prendre un conteneur posé au sol,
- élever celui-ci jusqu'à 1,6 m du sol environ et ce, en conservant ou non l'horizontalité de la charge,
- déplacer le conteneur en toutes positions du mouvement précédent, autorisant par exemple le chargement en avion de transport militaire,
- positionner rapidement et avec précision le conteneur dans les trois axes sur tout terrain carrossable,
- placer les deux éléments de manutention-roulage, sous le conteneur, pour constituer une remorque routière,
- régler l'empattement et la position des essieux en vue de la meilleure répartition des charges,
- être tracté ou poussé indifféremment d'un sens ou de l'autre par un véhicule,
- être tracté et poussé conjointement par deux véhicules, réserve étant faite que l'un des deux éléments de manutention-roulage soit à double essieux pour empêcher que le centre de gravité de la remorque sorte de son polygône de sustentation,
- tracter les éléments indépendemment, ou l'un derrière l'autre pour les déplacer à vide,
- placer les deux éléments de manutention-roulage en bout de conteneur dans l'équivalent volume d'un conteneur de 10 pieds (1 D.), c'est-à-dire deux fois cinq pieds de long,
- s'auto-positionner sur un plateau routier à l'aide d'un roule (tube rond) et d'un mini treuil,
- aller poser un petit conteneur sur un grand plateau ferroviaire, à partir d'un quai à niveau mais latéral au wagon.

D'autres particularités et avantages de l'invention ressortiront encore de la description non limitative ci-après.

Aux dessins annexés:

- la figure 1 est une vue en élévation d'un élément de manutention roulage en position tricycle, en train d'être approché d'un conteneur;
- les figures 2, 3, 4, 5 et 6 sont des vues analogues à la figure 1 mais montrant respectivement l'arrimage du conteneur, la position de levage, la position de réglage de l'empattement, la position route et la position escamotée;
- la figure 7 est une vue en élévation à plus petite échelle en cours de manutention;
- les figures 8 à 12 montrent les cinq étapes du chargement d'un conteneur à bord d'un avion;
- la figure 13 est une vue analogue à la figure 1, mais concernant un second mode de réalisation.

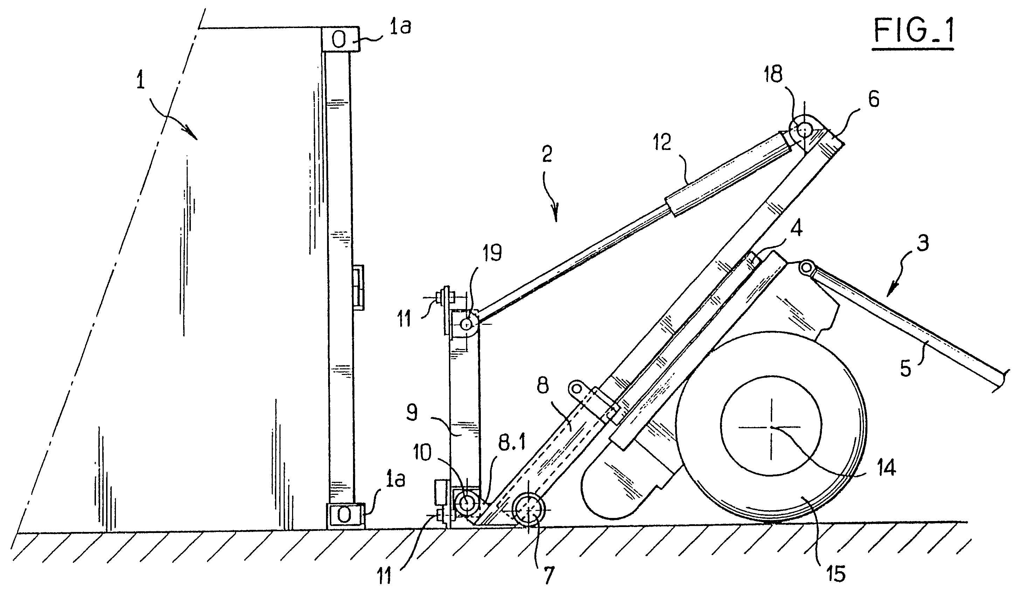

Chaque élément de manutention-roulage (2) (figure 1) est constitué d'un avant-train directeur (3) à rotation totale tel qu'utilisé pour le transport routier avec ou sans son système de freinage, de suspension, sa flèche d'attelage (5) et sa signalisation. Un rond à billes 4 permet l'orientation directionnelle d'un essieu 14, équpé de roues 15, par rapport à un châssis-rampe (6), d'une longueur en général inférieure à huit pieds, équipé de deux rails parallèles et écartés l'un de l'autre, perpendiculaires à l'axe du rond à billes 4.

Sous une première extrémité de ce châssis-rampe (6) est fixée une roulette pivotante (7), formant avec les deux roues 15 de l'essieu 14 un tricycle qui permet l'approche manuelle de chaque élément de manutention-roulage (2) (figure 1), l'essieu 14 étant orienté perpendiculairement aux rails du châssis 6.

Un chariot (8) coulissant librement et longitudinalement sur les rails du châssis-rampe (6) est équipé à l'une de ses extrémités de chapes (8.1) auxquelles un tablier (9) est articulé, selon un axe horizontal (10), transversal aux rails et à l'axe du rond à billes 4.

Ce tablier (9) constitué d'un cadre est équipé d'un ou plusieurs verrous (11) prévus pour s'introduire et se fixer dans le ou les trous normalisés des faces avant et arrière des pièces de coin (1a) des conteneurs (1).

A la seconde extrémité du châssis-rampe (6) est positionné le point de fixation articulé (18) d'un vérin simple ou double (12) éventuellement télescopique. Ce simple ou double vérin (12) est à double effet.

L'autre extrémité de ce vérin (12) est articulée au tablier (9) selon un second axe d'articulation (19), parallèle au premier axe (10) et écarté de celui-ci.

En position route à vide, le tablier (9) repose en général sur le chariot (8) caulissant.

Les articulations chariot (8) coulissant – tablier (9), tablier (9) – vérin (12) et vérin (12) – châssis-rampe (6) forment les trois sommets d'un triangle dont deux de ses côtés sont de longueur variable par coulissement du chariot sur le châssis-rampe et respectivement par action du vérin (12).

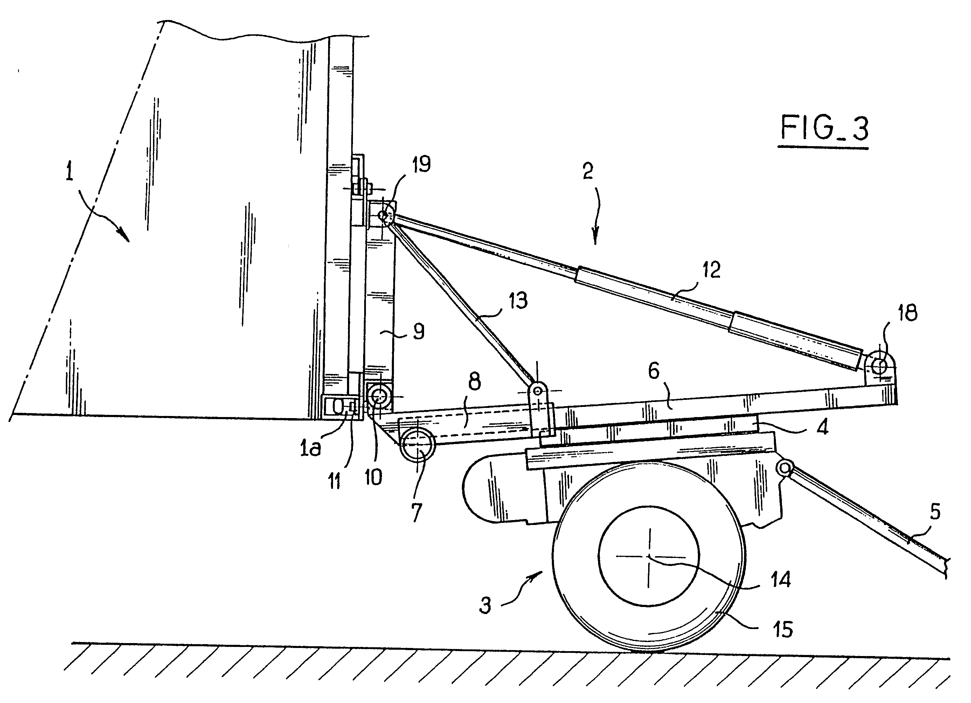

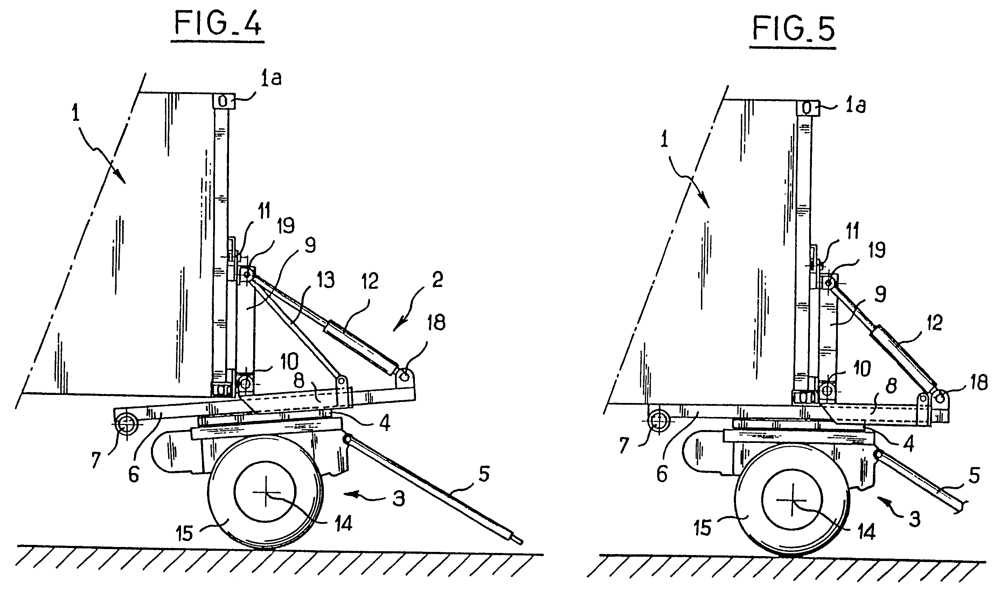

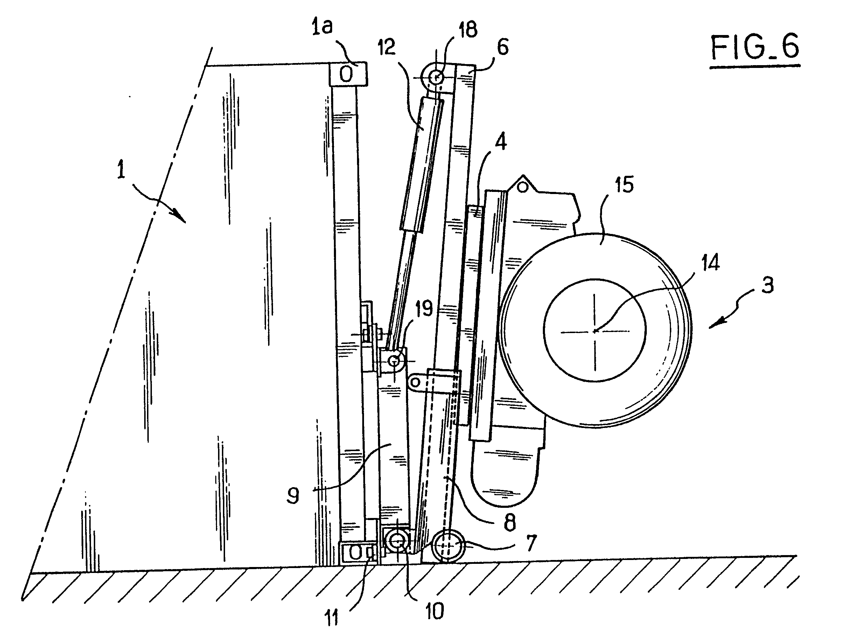

Une biellette (13) (figures 3 et 4) ou un compas permet de maintenir ou non l'angle que fait le tablier (9) par rapport au chariot (8) coulissant, c'est-à-dire l'angle entre le plan d'appui du tablier sur le conteneur et la direction des rails du châssis 6 de sorte que cet angle aura deux valeurs privilégiées, zéro (voir figure 6) et quatre vingt dix moins X degrés (0° et 90° -X°). X est en général de l'ordre de 10° ou moins (voir figure 3).

Selon que l'angle tablier (9) – chariot (8) coulissant est bloqué ou non, l'action du vérin (12) et de la gravité déplace le chariot (8) le long du châssis-rampe (6) ou respectivement fait varier l'angle tablier (9) châssis-rampe (6).

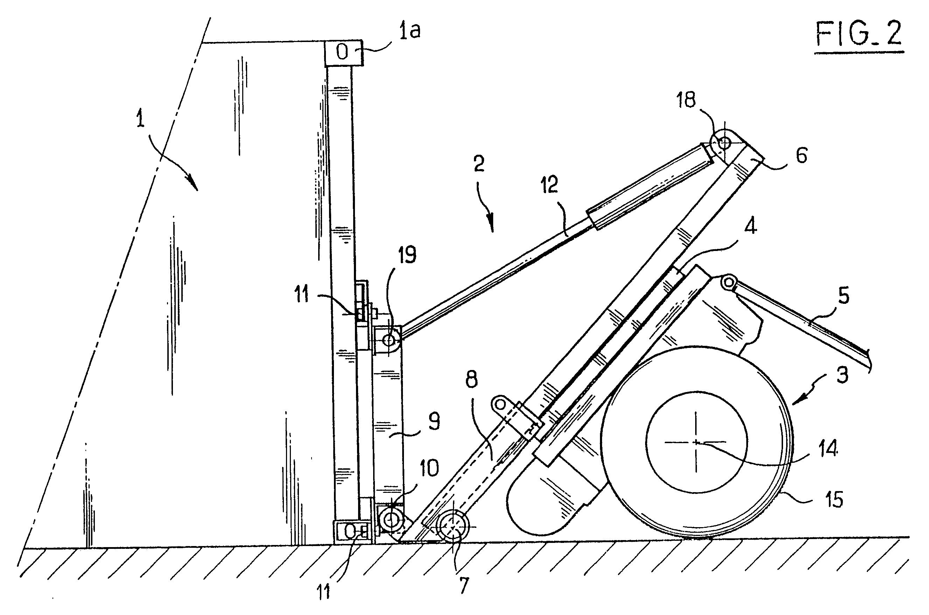

La variation de l'angle tablier (9) – châssis-rampe (6) entraîne la variation de l'angle châssis-conteneur (1) et exerce un bras de levier autour de l'essieu (14) sur le conteneur (1) (voir comparativement les figures 2 et 3).

D'autres systèmes utilisent déjà l'action de ce bras de levier pour lever le conteneur (1). L'invention permet en outre de faire glisser l'élément de manutention-roulage (2) sous le conteneur (1), ce qui est possible grâce à la manoeuvre suivante:

- l'angle de 90° - X° atteint, la biellette (13) de blocage d'angle est placée, (figure 3)
- l'action du vérin (12) est alors inversée entraînant le coulissement du chariot (8) sur le châssis-rampe (6), (figures 4 et 5),
- le coulissement sur le châssis-rampe (6) entraîne le coulissement du conteneur (1) sur l'élément de manutention-roulage (2) ou mieux, le coulissement de l'élément de manutention-roulage (2) sous le conteneur (1) avec roulement des roues (15) sur le sol.

Au fur et à mesure que le chariot (8) coulissant se rapproche de la verticale de l'axe des roues (15), les efforts de compression exercés sur la biellette (13) diminuent pour s'annuler puis s'inverser en efforts d'allongement de plus en plus important au fur et à mesure que le chariot (8) s'écarte de l'autre côté de l'axe du rond à billes (4), (figure 4).

Lorsque le chariot (8) arrive en butée, le vérin (12) en rétraction annule les efforts d'allongement exercés sur la biellette (13).

Il est possible alors de décrocher la biellette (13) avant de supprimer toute pression dans le vérin (12) et sa traction sur le tablier (9). Le conteneur (1) vient se reposer sur l'élément de manutention-roulage (2), (figure 5).

Un blocage du coulissement du chariot (8) actionné par le décrochement de la biellette (13) interdit toute fausse manoeuvre.

La position du chariot (8) ayant été inversée par rapport à l'axe du rond à billes (4), le bras de levier utilisé pour lever le conteneur (1) du sol vient plaquer le châssis-rampe (6) sous le conteneur (1). Ainsi le conteneur (1) vient se poser et se verrouiller sur l'élément de manutention-roulage (2).

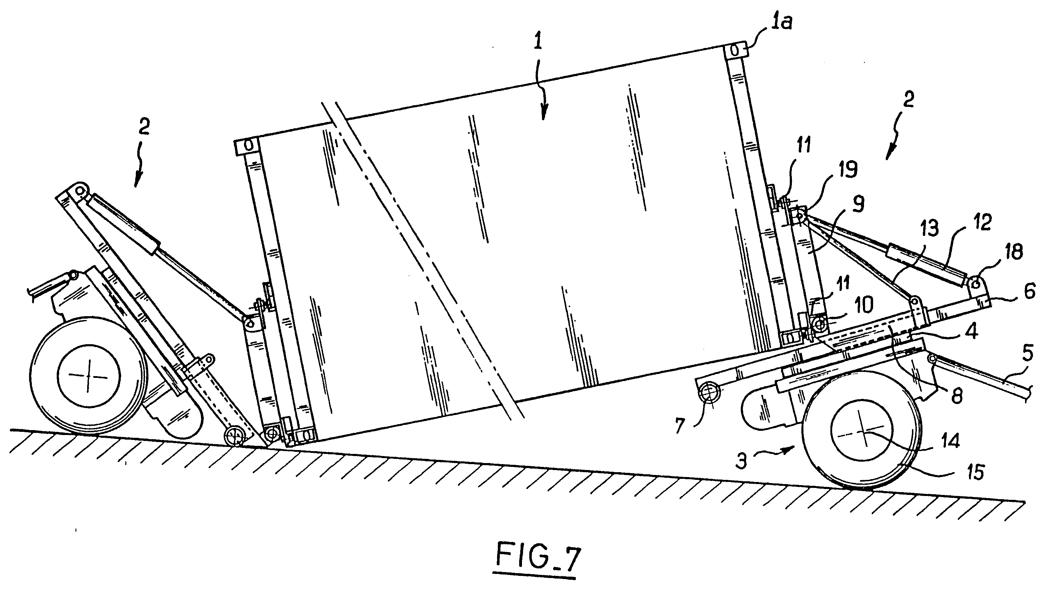

La même opération est faite conjointement ou indépendemment avec l'autre élément de manutention-roulage (2) à l'autre extrémité du conteneur (figure 7).

La dépose au sol se fait en appliquant le processus inverse à celui décrit.

Un ensemble de tuyauterie et de fils électriques permet de relier par l'intérieur ou l'extérieur les éléments de manutention-roulage (2) entre eux et au tracteur.

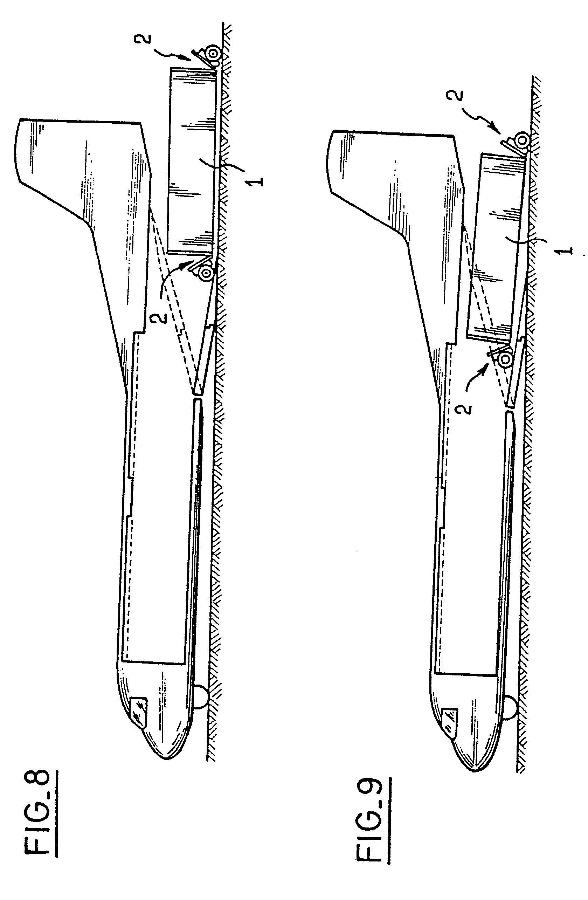

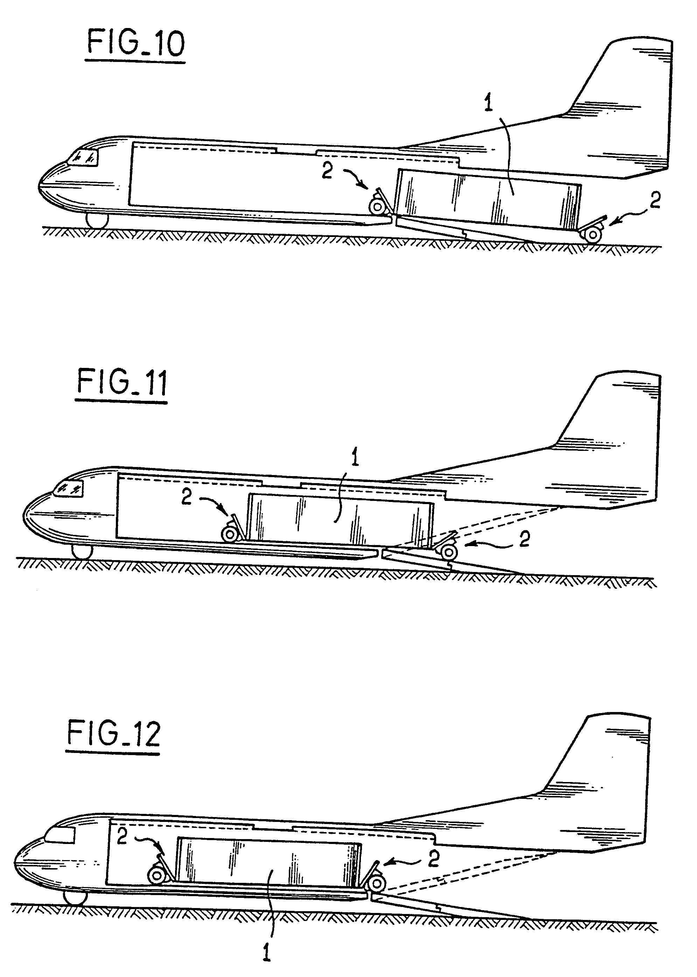

Comme le montrent les figures 8 à 12, pour charger un conteneur à bord d'un avion de transport dont le panneau de chargement forme un angle important avec le plancher de chargement, on met les éléments de manutention-roulage en position de levage et à l'aide du vérin (12), on règle la hauteur de chaque extrémité du conteneur pour tenir compte au mieux des impératifs de garde au sol et de hauteur disponible.

Les éléments selon l'invention permettent également de charger un conteneur sur un plateau surbaissé de camion. L'un des éléments étant initialement escamoté à une extrémité du conteneur (comme représenté à la figure 6), le plateau est reculé vers le conteneur. Une action sur le vérin permet d'amener les roues de l'élément en appui sur le plateau. L'élément est immobilisé sur le plateau grâce au treuil, généralement prévu sur le plateau. L'élément arrière, puis l'élément avant sont mis en position de levage. Grâce au treuil, l'ensemble est tiré sur la plate-forme, l'élément avant roulant sur la plate-forme et l'élément arrière roulant sur le sol. Si la plate-forme est longue, un roule ou tube de roulage est placé entre conteneur et plate-forme pour finir l'avancement sur la plate-forme alors que l'élément arrière est escamoté.

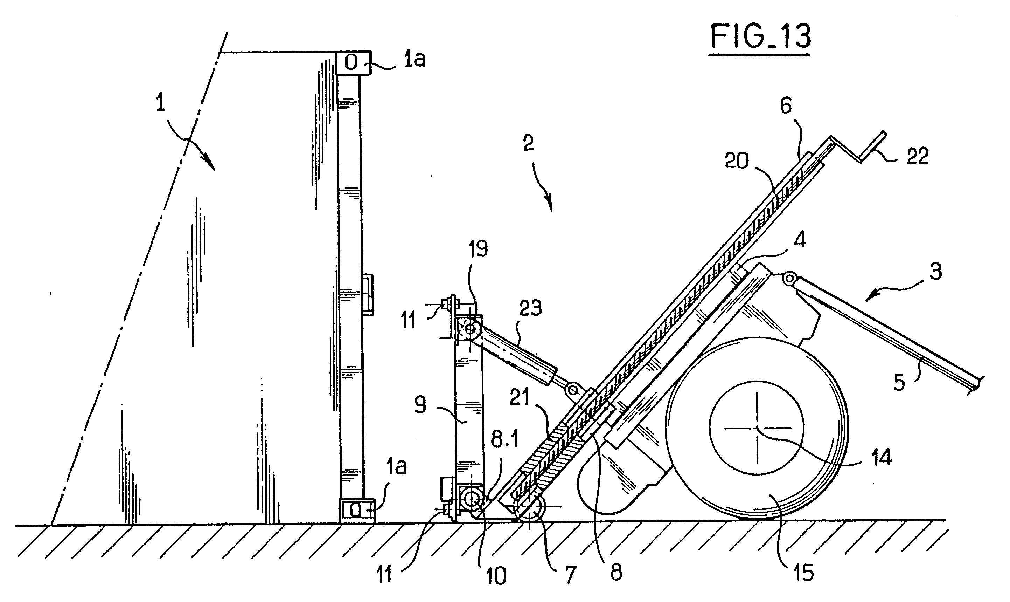

Le mode de réalisation représenté à la figure 13 reprend l'ensemble des éléments du premier mode de réalisation, excepté le vérin 12 et la biellette 13. Un vérin à double effet 23, est articulé au tablier 9 selon l'axe 19 et au chariot 8 selon un axe parallèle à l'axe 10 et écarté de celui-ci vers la seconde extrémité du châssis 6. En somme, le vérin 23 est monté de manière permanente là ou la biellette 13 était montée de manière sélective dans le mode de réalisation précédent. Par "permanente" on veut dire "ne nécessitant pas de démontage en cours d'utilisation".

De plus, le chariot 8 porte fixement un écrou 21 en prise de filetage avec une vis 20 portée rotativement par le châssis-rampe 6. La vis 20 est parallèle aux rails et s'étend sensiblement sur toute la longueur du châssis. Une manivelle 22, permet de faire tourner la vis 20 pour déplacer le chariot 8 le long du châssis 6.

L'élément 2 ainsi constitué s'utilise de la manière suivante:

Au départ (figure 13), le chariot 8 est en position extrême du côté de la roulette 7, et le vérin 23 règle a 45° environ l'angle entre tablier 11 et chariot 8. Une fois les verrous 11 en place dans les pièces 1a du conteneur 1, le vérin 23 est mis en fonctionnement à l'extension, jusqu'à ce que l'angle précité soit de 90° - X°. On actionne ensuite la manivelle 22 pour déplacer le chariot 8 vers son autre position extrême, tandis que le vérin 23 bloque l'angle. Enfin, l'action du vérin est arrêtée, pour laisser la charge reposer sur le châssis, comme exposé plus haut à propos du mode de réalisation précédent.

Ce mode de réalisation ne permet pas la position escamotée de la figure 6. Il est par contre de réalisation avantageuse car la vis 20 sollicite le chariot 8 selon la direction de déplacement, donc sans risque de coincement, de sorte que le chariot 8 peut sans problème reposer sur les rails par des patins de grande dimension plutôt que par des galets. Dès lors, le châssis-rampe, qui ne subit plus aucun effort localisé, ni de la part du chariot ni de la part du vérin 12 des figures 1 à 4, peut être fortement allégé.

**Revendications**

1. Dispositif de manutention-roulage destiné à être monté sur roues (15) et adapté à soulever une extrémité d'un conteneur (1) et le maintenir en position soulevée pendant un déplacement ou une manutention du conteneur, cet élément comprenant:

   – un châssis (6),
   – un tablier (9) muni de moyens (11) de fixation amovible à une face d'un conteneur (1) et articulé relativement au châssis (6) autour d'un axe d'articulation (10), et
   – des moyens (12, 13) pour régler l'angle entre le tablier (9) et le châssis (6),

caractérisé en ce que le tablier (9) est articulé autour de cet axe d'articulation à un chariot (8) déplaçable le long du châssis (6), aménagé en châssis-rampe, selon une direction transversale à l'axe d'articulation (10) entre une première position extrême où, de manière en soi, l'axe d'articulation (10) est voisin d'une extrémité du châssis (6) et une deuxième position où l'axe d'articulation (10) est en retrait de cette extrémité.

2. Dispositif selon la revendication 1, caractérisé en ce que les moyens pour régler l'angle entre le tablier (9) et le châssis-rampe (6) comprennent un vérin (12) articulé au tablier (9) à distance de l'axe d'articulation (10), et au châssis-rampe (6) à distance de sa-dite extrémité.

3. Dispositif selon la revendication 2, caractérisé en ce que les moyens pour régler l'angle entre le tablier et le châssis-rampe comprennent en outre des moyens (13) pour bloquer sélectivement le pivotement du tablier (9) par rapport au chariot (8), de façon que le vérin (12) puisse, une fois le blocage effectué, servir à déplacer le chariot (8) le long du châssis-rampe (6).

4. Dispositif selon la revendication 3, caractérisé en ce que les moyens pour bloquer sélectivement le positionnement du tablier, comprennent au moins une entretoise (13) amovible triangulant le tablier (9) et le chariot (8).

5. Dispositif selon la revendication 1, caractérisé en ce que les moyens pour régler l'angle entre le tablier (9) et le châssis (6) comprennent des moyens (13) pour bloquer amoviblement le pivotement du tablier (9) dans une position où le châssis (6) fait un angle légèrement inférieur à 90° avec la face concernée du conteneur (1) lorsque le tablier (9) est fixé à celle-ci.

6. Dispositif selon l'une des revendication 1 à 5, caractérisé en ce que le tablier (9) peut être fixé dans une position rabattue sur le châssis-rampe (6) avec des moyens de fixation capables de retenir le châssis (6) en position sensiblement verticale contre le tablier (9) lorsque le tablier (9) est fixé à un conteneur.

7. Dispositif selon la revendication 1, caractérisé en ce que les moyens pour régler l'angle entre le tablier (9) et le châssis (6) comprennent un vérin (23) articulé au tablier (9) à distance de l'axe d'articulation (10) et au chariot (8) à distance de l'axe d'articulation (10).

8. Dispositif selon la revendication 7, caractérisé par un second vérin (20, 21) s'étendant selon ladite direction transversale à l'axe d'articulation (10) et positionnant de manière réglable le chariot (8) le long du châssis-rampe (6).

9. Dispositif selon l'une des revendication 1 à 8, caractérisé en ce qu'il comprend une roulette (7) ou analogue montée sur le châssis-rampe (6) au voisinage de ladite extrémité de celui-ci, cette roulette (7) étant positionnée pour être en contact avec le sol lorsque le tablier (9) est en position propre à sa fixation sur une face du conteneur.

10. Dispositif selon l'une des revendications 1 à 9, caractérisé en ce que le châssis-rampe comporte des moyens pour son montage sur un véhicule avec possibilité de pivotement autour d'un axe parallèle à et distant de l'axe d'articulation entre le tablier et le chariot.

11. Elément de manutention-roulage comprenant un dispositif selon l'une des revendications 1 à 9 dont le châssis-rampe est fixé à un train roulant (3).

12. Elément selon la revendication 11, caractérisé en ce que le train roulant (3) est orientable directionnellement par rapport au châssis-rampe (6).

**Patentansprüche**

1. Vorrichtung zur Container-Rollbeförderung, zur Lagerung auf Rädern (15) bestimmt und geeignet zum Anheben eines Endes eines Containers

(1) um diesen in angehobener Stellung zu halten, während einer Bewegung oder Beförderung des Behälters erfolgt, wobei dieses Element umfasst:

- einen Rahmen (6),
- eine Tafel (9), die Einrichtungen (11) zur lösbaren Befestigung an einer Flache eines Containers (1) aufweist und um eine Gelenkachse (10) bezüglich des Rahmens (6) angelenkt ist, und
- Mittel (12, 13) zur Einstellung des Winkels zwischen der Tafel (9) und dem Rahmen (6),

dadurch gekennzeichnet, dass die Tafel (9) um die Gelenkachse (10) an einem Wagen (8) angelenkt ist, welcher entlang dem als Rahmen-Rampe ausgebildeten Rahmen (6) in einer Richtung quer zur Gelenkachse (10) zwischen einer ersten Endstellung, in welcher in an sich bekannter Weise die Gelenkachse (10) einem Ende des Rahmens (9) benachbart liegt, und einer zweiten Endstellung, in welcher die Gelenkachse (10) diesseits dieser Ende liegt, beweglich ist.

2. Vorrichtung nach Anspruch 1, dadurch gekennzeichnet, dass die Mittel zur Einstellung des Winkels zwischen der Tafel (9) und der Raghmen-Rampe (6) einen Hubzylinder (12) umfassen, welcher an der Tafel (9) entfernt von der Gelenkachse (10) und an der Rahmen-Rampe (6) entfernt von ihrem genannten Ende angelenkt ist.

3. Vorrichtung nach Anspruch 2, dadurch gekennzeichnet, dass die Mittel zur Einstellung des Winkels zwischen der Tafel und der Rahmen-Rampe ferner Mittel (13) umfassen, um die Verschwenkung der Tafel (9) bezüglich des Wagens (8) selektiv zu blockieren, so dass der Hubzylinder (12) nach erfolgter Blockierung dazu dienen kann, den Wagen (8) längs der Rahmen-Rampe (6) zu bewegen.

4. Vorrichtung nach Anspruch 3, dadurch gekennzeichnet, dass die Mittel zum selektiven Blockieren der Stellung der Tafel wenigstens eine entfernbare Strebe (13) umfassen, die einen Dreiecksverband mit der Tafel (9) und dem Wagen (8) herstellt.

5. Vorrichtung nach Anspruch 1, dadurch gekennzeichnet, dass die Mittel zur Einstellung des Winkels zwischen der Tafel (9) und dem Rahmen (6) Mittel (13) zur lösbaren Blockierung der Verschwenkung der Tafel (9) in einer Stellung umfassen, in welcher der Rahmen (6) einen Winkel von etwas weniger als 90° mit der betreffenden Flache des Containers (1) bildet, wenn die Tafel (9) an dieser befestigt ist.

6. Vorrichtung nach einem der Ansprüche 1 bis 5, dadurch gekennzeichnet, dass die Tafel (9) in einer auf die Rahmen-Rampe (6) zusammengeklappten Stellung durch Befestigungsmittel befestigt werdern kann, die geeignet sind, um den Rahmen (6) in einer annähernd senkrechten Stellung gegen die Tafel (9) zu halten, wenn die Tafel (9) an einem Container befestigt ist.

7. Vorrichtung nach Anspruch 1, dadurch gekennzeichnet, dass die Mittel zur Einstellung des Winkels zwischen der Tafel (9) und dem Rahmen (6) einen Hubzylinder (23) umfassen, der an der Tafel (9) im Abstand von der Gelenkachse (10) und an dem Wagen (8) im Abstand von der Gelenkachse (10) angelenkt ist.

8. Vorrichtung nach Anspruch 7, gekennzeichnet durch einen zweiten Hubzylinder (20, 21), der sich in der genannten zur Gelenkachse (10) transversalen Richtung erstreckt und den Wagen (8) längs der Rahmen-Rampe (6) einstellbar positioniert.

9. Vorrichtung nach einem der Ansprüche 1 bis 8, dadurch gekennzeichnet, dass sie eine Rolle (7) oder dergleichen umfasst, welche an der Rahmen-Rampe (6) in der Nähe des genannten Endes derselben gelagert ist, wobei diese Rolle (7) sich in einer solchen Stellung befindet, dass sie mit dem Boden in Berührung kommt, wenn die Tafel (9) sich in der Stellung zur Befestigung an einer Fläche des Containers befindet.

10. Vorrichtung nach einem der Ansprüche 1 bis 9, dadurch gekennzeichnet, dass die Rahmen-Rampe Mittel zur Montage derselben an einem Fahrzeug umfasst, welche die Verschwenkung um eine Achse gestatten, die zur Gelenkachse zwischen der Tafel und dem Wagen parallel und von dieser Gelenkachse beabstandet ist.

11. Rollbeförderungselement mit einer Vorrichtung nach einem der Ansprüche 1 bis 9, deren Rahmen-Rampe an einem Fahrgestell (3) befestigt ist.

12. Element nach Anspruch 11, dadurch gekennzeichnet, dass das Fahrgestell (3) in seiner Richtung bezüglich der Rahmen-Rampe (6) orientiert werden kann.

## Claims

1. A handling and haulage device for mounting on wheels (15) and adapted to lift one end of a container (1) and hold it in a raised position during motion or handling of the container, the element comprising:

- a frame (6),
- a superstructure (9) comprising means (11) for removably securing it to one surface of a container (1) and pivoted with respect to the frame (6) about a pivot axis (10); and
- means (12, 13) for adjusting the angle between the superstructure (9) and the frame (6),

characterised in that the superstructure (9) is pivoted about said axis to a carriage (8) movable along the frame (6), which is designed as a ramp-frame, in a direction transverse to the pivot axis (10) between a first end position in which, as known per se, the pivot axis (10) is near one end of the frame (6) and a second end position in which the pivot axis (10) is set back from said end.

2. A device according to claim 1, characterised in that the means for adjusting the angle between the superstructure (9) and the ramp-frame (6) comprise a jack (12) pivoted to the superstructure (9) at a distance from the pivot axis (10) and to the ramp-frame (6) at a distance from said end therof.

3. A device according to claim 2, characterised in that the means for adjusting the angle between the superstructure and the ramp-frame also comprise means (13) for selectively locking the superstructure (9) in its pivotal motion relative to the carriage (8), so that after the locking operation the jack (12) can be used to move the carriage (8) along the ramp-frame (6).

4. A device according to claim 3, characterised in that the means for selectively locking the superstructure in position comprise at least one removable cross-member (13) for triangulating the superstructure (9) and the carriage (8).

5. A device according to claim 1, characterised in that the means for adjusting angle between the superstructure (9) and the frame (6) comprise means (13) for selectively inhibiting pivotal motion of the superstructure (9) in a position where the frame (6) is at an angle slightly less than 90° to the appropriate surface of the container (1) when the superstructure (9) is secured to said surface.

6. A device according to any of claims 1 to 5, characterised in that the superstructure (9) can be secured in a folded-back position on the ramp-frame (6) by securing means adapted to hold the frame (6) in a substantially vertical position against the superstructure (9) when the superstructure (9) is secured to a container.

7. A device according to claim 1, characterised in that the means for adjusting the angle between the superstructure (9) and the frame (6) comprise a jack (23) pivoted to the superstructure (9) at a distance from the pivot axis (10) and to the carriage (8) at a distance from the pivot axis (10).

8. A device according to claim 7, characterised by a second jack (20, 21) extending in said direction transverse to the pivot axis (10) and adjustably positioning the carriage (8) along the ramp-frame (6).

9. A device according to any of claims 1 to 8, characterised in that it comprises a caster, roller or the like (7) mounted on the ramp-frame (6) near said end thereof, the roller (7) being positioned so as to be in contact with the ground when the superstructure (9) is in position for securing to a surface of the container.

10. A device according to any of claims 1 to 9, characterised in that the ramp-frame comprises means for pivotal mounting thereof onto a vehicle around an axis parallel to and spaced apart from the pivot axis between the superstructure and the carriage.

11. A handling and haulage element comprising a device according to any of claims 1 to 9 and having said ramp-frame secured to an undercarriage (3).

12. An element according to claim 11, characterised in that the undercarriage (3) is steerable with regard to the ramp-frame (6).

FIG.1

EP 0 243 276 B1

FIG_2

EP 0 243 276 B1

FIG_3

FIG.4

FIG.5

EP 0 243 276 B1

FIG_6

EP 0 243 276 B1

FIG.7

FIG_8

FIG_9

EP 0 243 276 B1

## FIG_10

## FIG_11

## FIG_12

FIG_13

EP 0 243 276 B1